# EUROPÄISCHE PATENTANMELDUNG

(11) **EP 4 844 361 A1**
(43) Veröffentlichungstag der Anmeldung: **25.11.2026**
(21) Anmeldenummer: 25178543.2
(22) Anmeldetag: 23.05.2025
(51) Int. Cl.: G01M 13/021, G01M 13/025

(54) **VERFAHREN ZUR WÄLZPRÜFUNG VON VERZAHNUNGEN**

(71) Anmelder: Klingelnberg AG, 8050 Zürich (CH)
(72) Erfinder: Weiss, Holger, 76229 Karlsruhe (DE)
(74) Vertreter: Janke Scholl Patentanwälte PartG mbB

(57) **Zusammenfassung**

Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt, wobei während der Wälzprüfung eine Drehzahlrampe gefahren wird, um Messwerte des zu prüfenden Zahnrads entlang der Drehzahlrampe zu ermitteln, wobei für mindestens einen Drehzahlbereich des zu prüfenden Zahnrads, eine Steigerung der Drehzahl pro Umdrehung des zu prüfenden Zahnrads konstant ist, und/oder wobei für mindestens einen Drehzahlbereich des zu prüfenden Zahnrads, eine Änderung Steigerung der Drehzahl pro Umdrehung des zu prüfenden Zahnrads innerhalb vordefinierter Grenzen ist.

## Beschreibung

Die vorliegende Erfindung betrifft ein Verfahren, mit dem Verfahrensschritt: Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt, wobei während der Wälzprüfung eine Drehzahlrampe gefahren wird, um Messwerte des zu prüfenden Zahnrads entlang der Drehzahlrampe zu ermitteln.

Im Stand der Technik ist bekannt, die Wälzprüfung einer Verzahnung für verschiedene Drehzahlniveaus, d.h. im stationären Zustand für einzelne Drehzahlen, durchzuführen. So wird eine bestimmte Prüfdrehzahl eingestellt und gehalten, wobei währenddessen Messwerte der Wälzprüfung erfasst werden. Dieses Vorgehen hat den Nachteil, dass es sehr zeitaufwändig ist, ein ganzes Drehzahlspektrum abzudecken und mittels FFT- und Ordnungsanalyse auszuwerten.

In der betrieblichen Praxis hat sich daher das Abfahren von Drehzahlrampen durchgesetzt, wobei die zu prüfende Verzahnung während der Wälzprüfung mittels des Abfahrens der Drehzahlrampe für einen Drehzahlbereich geprüft wird, der für die betreffende Verzahnung im fertig montierten Zustand, z.B. in einem Fahrzeuggetriebe, relevant ist.

Beim Abfahren derartiger Drehzahlrampen ist es üblich, eine konstante Beschleunigung über der Zeit einzustellen, so dass die Drehzahl mit konstanter Beschleunigung über der Zeit bis zu einer vorgegebenen maximalen Drehzahl gesteigert wird. Die Drehzahl steigt daher über der Zeit linear an. Dieses Vorgehen hat jedoch zur Folge, dass die Steigerung der Drehzahl pro Zahnradumdrehung kontinuierlich abnimmt, da die Beschleunigung der Drehzahl über der Zeit konstant ist.

Bei einer konstanten Beschleunigung über der Zeit kann folglich kein konstantes Ordnungsspektrum pro Zahnradumdrehung angegeben werden, da jede Einzelumdrehung des Zahnrads eine andere Drehzahlzunahme aufweist. Wird je Zahnradumdrehung ein Ordnungsspektrum angegeben, so sind, bei konstanter Beschleunigung, die Drehzahlintervalle zwischen zwei benachbarten Ordnungsspektren zu Beginn der Drehzahlrampe groß und werden gegen Ende der Drehzahlrampe immer kleiner. Um diesen Effekt auszugleichen, wird in der Praxis zwischen den erhaltenen Spektren über der Drehzahl interpoliert.

Die interpolierten Spektren sind keine echten gemessenen Daten, sondern rechnerisch angenäherte Werte. Die Interpolation kann zu Glättungseffekten, zur Verwaschung schmalbandiger Ordnungen oder zu Artefakten führen, besonders für den Fall, dass zwischen stark unterschiedlichen Spektren interpoliert wird. Da bei niedriger Drehzahl pro Zeiteinheit weniger Umdrehungen stattfinden, ist die Dichte an real erfassten Spektren dort geringer. Das Interpolieren kann diese Lücke zwar rechnerisch füllen, jedoch keine echten Informationen erzeugen. Resonanzen oder Anregungen im unteren Drehzahlbereich werden daher ggf. falsch dargestellt.

Vor diesem Hintergrund liegt der Erfindung die technische Problemstellung zugrunde, eine verbesserte Wälzprüfung anzugeben, die die voranstehenden Nachteil nicht oder zumindest in geringerem Maße aufweist.

Die voranstehend beschriebene, technische Problemstellung wird mit den Merkmalen des unabhängigen Anspruchs gelöst. Weitere Ausgestaltungen der Erfindung ergeben sich aus den abhängigen Ansprüchen und der nachstehenden Beschreibung.

Erfindungsgemäß wird ein Verfahren angegeben, mit dem Verfahrensschritt: Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt, wobei während der Wälzprüfung eine Drehzahlrampe gefahren wird, um Messwerte des zu prüfenden Zahnrads entlang der Drehzahlrampe zu ermitteln. Das Verfahren zeichnet sich dadurch aus, dass für mindestens einen Drehzahlbereich des zu prüfenden Zahnrads, eine Steigerung der Drehzahl pro Umdrehung des zu prüfenden Zahnrads konstant ist, und/oder dass, für mindestens einen Drehzahlbereich des zu prüfenden Zahnrads, eine Änderung Steigerung der Drehzahl pro Umdrehung des zu prüfenden Zahnrads innerhalb vordefinierter Grenzen ist.

Für den Fall, dass für mindestens einen Drehzahlbereich des zu prüfenden Zahnrads, eine Steigerung der Drehzahl pro Umdrehung des zu prüfenden Zahnrads konstant ist, kann durch das erfindungsgemäße Vorgehen für diesen Drehzahlbereich eine konstante Messwertdichte über der Drehzahlrampe erreicht werden, so dass die erhaltenen Ordnungsspektren gleichmäßig über der Drehzahl verteilt sind. In diesem Fall steigert sich die Drehzahl je Umdrehung des zu prüfenden Zahnrads immer in gleicher Weise. So kann eine gleichmäßige spektrale Auflösung über der Drehzahl erreicht werden bzw. eine konstante Messwertdichte entlang dieses Drehzahlbereichs der Drehzahlrampe erreicht werden. Mit anderen Worten erfolgt eine konstante Beschleunigung pro Umdrehung des zu prüfenden Zahnrads.

Für den Fall, dass für mindestens einen Drehzahlbereich des zu prüfenden Zahnrads, eine Änderung der Steigerung der Drehzahl pro Umdrehung des zu prüfenden Zahnrads innerhalb vordefinierter Grenzen ist, kann eine im Wesentlichen konstante Messwertdichte über der Drehzahlrampe erreicht werden, so dass die erhaltenen Ordnungsspektren im Wesentlichen gleichmäßig über der Drehzahl verteilt sind. In diesem Fall steigert sich die Drehzahl je Umdrehung des zu prüfenden Zahnrads nicht immer in gleicher Weise, jedoch in vorgegebenen, technisch sinnvollen Grenzen. So kann eine ausreichend homogene Auflösung über der Drehzahl erreicht werden bzw. eine im Wesentlichen konstante Messwertdichte entlang dieses Drehzahlbereichs der Drehzahlrampe erreicht werden. Mit anderen Worten erfolgt eine im Wesentlichen konstante Beschleunigung pro Umdrehung des zu prüfenden Zahnrads.

Gemäß einer Ausgestaltung des Verfahrens kann vorgesehen sein, dass für den mindestens einen Drehzahlbereich, innerhalb dessen die Steigerung der Drehzahl pro Umdrehung des zu prüfenden Zahnrads konstant ist, die Drehzahl des zu prüfenden Zahnrads gemäß der folgenden Vorschrift gesteigert wird: $v \left(t\right) = {v}_{o} ∗ {e}^{\left(k∗t\right)}$ wobei
- *v (t)*: dem Drehzahlverlauf über der Zeit in Umdrehungen pro Minute,
- *vₒ*: der Anfangsdrehzahl in Umdrehungen pro Minute zu einem Startzeitpunkt *t* = 0,
- *e*: der eulerschen Zahl,
- *k*: der Steigerung der Drehzahl pro Umdrehung des zu prüfenden Zahnrads in 1/min
- *t*: der Zeit in Minuten
entspricht.

Es handelt sich dabei um einen exponentiellen Drehzahlverlauf über der Zeit, für den sich eine konstante Steigerung der Drehzahl pro Umdrehung des zu prüfenden Zahnrads ergibt.

Es kann vorgehen sein, dass die Steigerung der Drehzahl pro Umdrehung des zu prüfenden Zahnrads konstant ist, und insbesondere 0,5 U/min oder 1 U/min oder 1,5 U/min oder 2 U/min pro Umdrehung des zu prüfenden Zahnrads beträgt - so dass für die voranstehende Formel k = 0,5*1/min oder k = 1*1/min oder k = 1,5*1/min oder k = 2*1/min beträgt.

Es versteht sich, dass sich für die voranstehende Formel gleichermaßen die Zeit in Sekunden angeben lässt. Für eine Steigerung der Drehzahl pro Umdrehung des zu prüfenden Zahnrads, die konstant ist, und die insbesondere 0,5 U/min oder 1 U/min oder 1,5 U/min oder 2 U/min pro Umdrehung des zu prüfenden Zahnrads beträgt, würde in diesem Fall daher k = 0,5*1/60s oder k = 1*1/60s oder k = 1,5*1/60s oder k = 2*1/60s betragen, sofern t gemäß vorgenannter Formel der Zeit in Sekunden entspricht.

Es kann vorgehen sein, dass für den mindestens einen Drehzahlbereich, innerhalb dessen die Änderung der Steigerung der Drehzahl pro Umdrehung des zu prüfenden Zahnrads innerhalb vordefinierter Grenzen ist, die Änderung der Steigerung der Drehzahl für aufeinanderfolgende Umdrehungen des zu prüfenden Zahnrads weniger als 10 Prozent beträgt, so dass gilt: ${k}_{n} ∗ {a}_{n} \leq {k}_{n + 1}$
*kₙ* der Steigerung der Drehzahl einer vorhergehenden Umdrehung,
*k*_{*n*+1} der Steigerung der Drehzahl einer auf diese vorhergehende Umdrehung nachfolgenden Umdrehung entspricht, und
*aₙ* einem Faktor größergleich 0,9 und kleinergleich 1,1 entspricht und wobei der Index *n,* mit $n ∈ ℕ$*,* einer fortlaufenden Nummerierung aufeinanderfolgender Umdrehungen des zu prüfenden Zahnrads entspricht.

Insbesondere kann für den vorgenannten Fall vorgesehen sein, dass eine kumulierte Abweichung der Steigerung der Drehzahl für diesen Drehzahlbereich ±100 % nicht überschreitet, insbesondere ±50 % nicht überschreitet, weiter insbesondere ±25 % nicht überschreitet. Denn für den oberen Rand der oben genannten Vorschrift würde sich im Extremfall ein exponentielles Wachstum der Steigerung der Drehzahl ergeben. Es soll jedoch eine zulässige Schwankung angegeben werden, für die die erfindungsmäßen Vorteile der im Wesentlichen konstanten Messwertdichte der erzeugten Spektren weiterhin gegeben ist.

Es kann vorgesehen sein, dass für den mindestens einen Drehzahlbereich, innerhalb dessen die Änderung der Steigerung der Drehzahl pro Umdrehung des zu prüfenden Zahnrads innerhalb vordefinierter Grenzen ist, eine zulässige Abweichung der Steigerung der Drehzahl von einer mittleren Steigerung der Drehzahl über dem Drehzahlbereich für jede Umdrehung des Zahnrads im Drehzahlbereich kleiner als 10 % ist. Es kann daher eine zulässige Abweichung von einer mittleren Steigerung der Drehzahl angegeben werden, für die die erfindungsmäßen Vorteile der im Wesentlichen konstanten Messwertdichte der erzeugten Spektren weiterhin gegeben ist.

Die Drehzahlrampe kann derart abgefahren werden, dass für die gesamte Drehzahlrampe eine Steigerung der Drehzahl pro Umdrehung des zu prüfenden Zahnrads konstant ist.

Alternativ kann vorgesehen sein, dass nur für einen Teil der Drehzahlrampe eine Steigerung der Drehzahl pro Umdrehung des zu prüfenden Zahnrads konstant ist, während für einen anderen Teil der Drehzahlrampe eine Änderung Steigerung der Drehzahl pro Umdrehung des zu prüfenden Zahnrads innerhalb vordefinierter Grenzen ist. Demnach können Drehzahlbereiche der Drehzahlrampe priorisiert und mit konstanter Steigerung der Drehzahl pro Umdrehung des zu prüfenden Zahnrads abgefahren werden.

Alternativ kann vorgesehen sein, dass für keinen Teil der Drehzahlrampe eine Steigerung der Drehzahl pro Umdrehung des zu prüfenden Zahnrads konstant ist, so dass für die gesamte Drehzahlrampe eine Änderung Steigerung der Drehzahl pro Umdrehung des zu prüfenden Zahnrads innerhalb vordefinierter Grenzen ist.

Die Drehzahlrampe kann von einer minimalen Drehzahl bis zu einer maximalen Drehzahl definiert sein, wobei das Abfahren der Drehzahlrampe bedeutet, dass die Drehzahl des zu prüfenden Zahnrads ausgehend von der minimalen Drehzahl bis zur maximalen Drehzahl gesteigert wird. Alternativ kann die minimale Drehzahl auch als untere Grenze der Drehzahlrampe und die maximale Drehzahl als obere Grenze der Drehzahlrampe bezeichnet werden.

Die Drehzahlbereiche der Drehzahlrampe können innerhalb der Drehzahlrampe definiert sein und können für die gesamte Drehzahlrampe oder nur für einen Teil der Drehzahlrampe gelten. Soweit eine Drehzahlrampe z.B. von 0 U/min bis 1200 U/min definiert ist, kann derjenige Drehzahlbereich innerhalb dieser Drehzahlrampe des zu prüfenden Zahnrads, für den eine Steigerung der Drehzahl pro Umdrehung des zu prüfenden Zahnrads konstant ist, z.B. von 0 U/min bis 800 U/min definiert sein, während derjenige Drehzahlbereich innerhalb dieser Drehzahlrampe des zu prüfenden Zahnrads, für den eine Änderung Steigerung der Drehzahl pro Umdrehung des zu prüfenden Zahnrads innerhalb vordefinierter Grenzen ist, z.B. von 801 U/min bis 1200 U/min definiert sein kann.

Während der Wälzprüfung kann ein mehrfaches Beschleunigen und Abbremsen des zu prüfenden Zahnrads erfolgen.

Wenn vorliegend davon gesprochen wird, dass während der Wälzprüfung eine Drehzahlrampe gefahren wird, so kann dies durch Antreiben des prüfenden Zahnrads mittels des Wälzprüfstands und/oder durch Antreiben des Gegenrads mittels des Wälzprüfstands erfolgen.

Beispielsweise kann vorgesehen sein, dass nur das zu prüfende Zahnrad oder nur das Gegenrad angetrieben wird. Auch kann vorgesehen sein, dass das Gegenrad angetrieben wird und das zu prüfende Zahnrad abgebremst wird, um eine definierte Anpresskraft bzw. ein definiertes Drehmoment zu erzeugen. Da das zu prüfende Zahnrad und das Gegenrad während der Wälzprüfung im abwälzenden Zahnkontakt miteinander kämmen, ist unerheblich, ob zum Abfahren der Drehzahlrampe das zu prüfende Zahnrad oder das Gegenrad angetrieben werden. Denn die jeweilige Drehbewegung wird infolge des Zahnkontakts wechselseitig vom treibenden auf das geriebene Rad übertragen.

Nachfolgend wird die Erfindung anhand von Zeichnungen näher beschreiben. Es zeigen jeweils schematisch:
- Fig. 1: einen Prüfstand zur Einflankenwälzprüfung;
- Fig. 2: einen Prüfstand zur Zweiflankenwälzprüfung;
- Fig. 3: ein Ordnungsspektrum;
- Fig. 4: eine Drehzahl, aufgetragen über der Zahnradumdrehung für eine konstante Beschleunigung über der Zeit gemäß dem Stand der Technik;
- Fig. 5: eine Drehzahl, aufgetragen über der Zahnradumdrehung für eine nicht-konstante Beschleunigung über der Zeit;
- Fig. 6: ein konstante Änderung der Drehzahl je Zahnradumdrehung, aufgetragen über der Zahnradumdrehung;
- Fig. 7: ein nicht-konstante Änderung der Drehzahl je Zahnradumdrehung, aufgetragen über der Zahnradumdrehung;
- Fig. 8: eine nicht-konstante Änderung der Drehzahl je Zahnradumdrehung, aufgetragen über der Zahnradumdrehung gemäß dem Stand der Technik;
- Fig. 9.: ein konstante und nicht-konstante Änderung der Drehzahl je Zahnradumdrehung, aufgetragen über der Zahnradumdrehung;
- Fig. 10: einen Verfahrensschritt des erfindungsgemäßen Verfahrens.

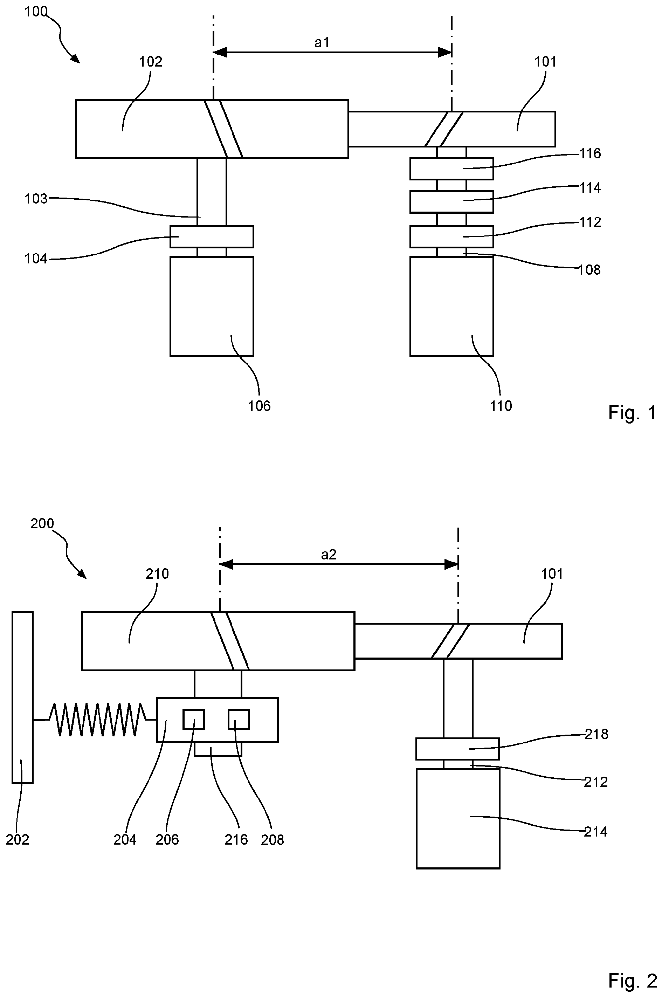

Fig. 1 zeigt exemplarisch und schematisch einen Prüfstand 100 zur Einflankenwälzprüfung. Der Prüfstand 100 weist ein Lehrzahnrad 102, d.h. ein Gegenrad 102 auf, dass zum Abwälzen mit einer Verzahnung eines zu prüfenden Zahnrads 101 im Zahneingriff ist. Ein Achsabstand a1 zwischen einer Welle 103, die das Lehrzahnrad 102 trägt, und einer Welle 108, die das zu prüfende Zahnrads 101 trägt, ist vorliegend konstant.

Ein Drehmoment und eine Drehzahl zur Prüfung des zu prüfenden Zahnrads 101 wird über die Antriebe 110 und 106 eingestellt. Messwerte werden mittels der Sensoren 104, 112, 114 und 116 erfasst, die Winkelgeber, Drehbeschleunigungsaufnehmer und Vibrations- bzw. Geräuschsensoren sein können.

Fig. 2 zeigt exemplarisch und schematisch einen Prüfstand 200 zur Zweiflankenwälzprüfung. Ein Lehrzahnrad 210, d.h. ein Gegenrad 210, ist auf einer Welle 216 aufgenommen, wobei die Welle 216 an einem bewegbaren Schlitten 204 gehalten ist, der relativ zu einer Stützstruktur 202 verschiebbar ist. Das Lehrzahnrad 210 ist federnd elastisch vorgespannt in Richtung des zu prüfenden Zahnrads 101 gepresst, um eine definierte Anlage im Zweiflankenkontakt zwischen dem Lehrzahnrad 210 und dem zu prüfenden Zahnrad 101 zu erzeugen. Ein Achsabstand a2 zwischen der Welle 216 und einer Welle 212, auf der das zu prüfende Zahnrad 101 gehalten ist, ist vorliegend veränderlich. Der Welle 212 ist ein Antrieb 214 zum Drehantreiben der Welle 212 zugeordnet. Weiter sind Sensoren 206, 208 zur Messung der Veränderungen des Achsabstands a2 vorgesehen. Das Bezugszeichen 218 repräsentiert einen weiteren Sensor 218, der eine Winkelmessung und/oder eine Drehbeschleunigungsmessung und/oder eine Vibrationsmessung ausführen kann.

Die Fig. 1 und Fig. 2 dienen lediglich dazu, das jeweils hinlänglich bekannte Grundprinzip der Einflankenwälzprüfung und der Zweiflankenwälzprüfung zu beschreiben. Es sind Vorrichtungen bzw. Wälzprüfmaschinen bekannt, die sowohl zur Einflankenwälzprüfung als auch zur Zweiflankenwälzprüfung geeignet sind, wie z.B. die unter dem Namen R300 vertriebene Wälzprüfmaschine der Anmelderin. So sind derartige Maschinen z.B. zur Einflanken-Wälzprüfung, Körperschall- und Drehbeschleunigungsprüfung und Zweiflanken-Wälzprüfung geeignet.

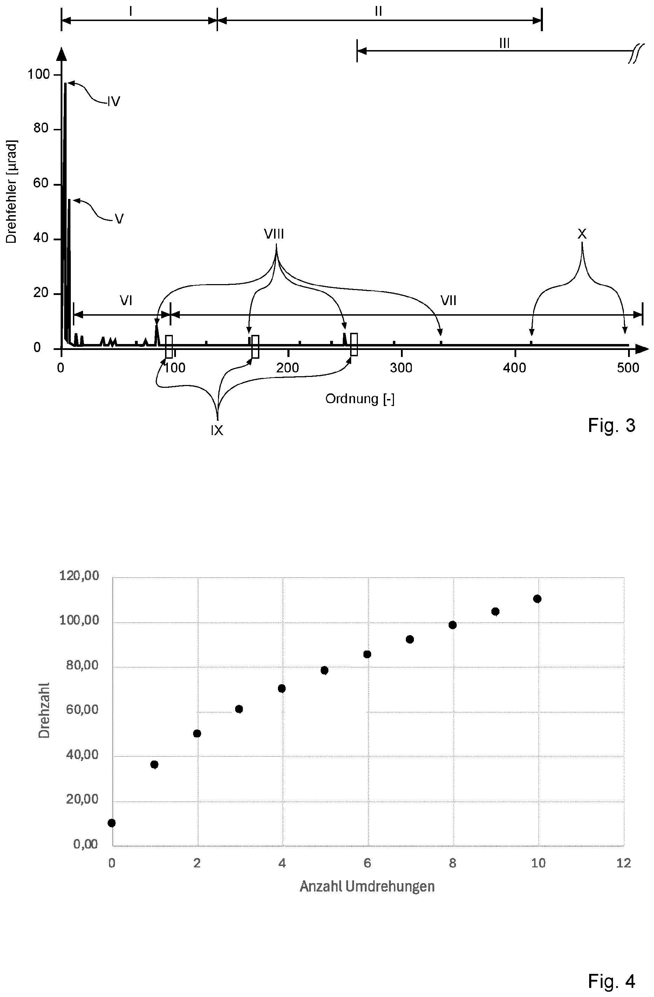

Fig. 3 zeigt exemplarisch und schematisch ein einzelnes Ordnungsspektrum als Ergebnis der Wälzprüfung für eine Umdrehung des zu prüfenden Zahnrads. Hierbei ist ein gemessener Drehfehler in µrad über den Ordnungen aufgetragen. Die Ordnungen sind dabei in bekannter Weise als ein Vielfaches der Drehzahl definiert. Unter Ordnungsanalyse ist die Analyse von Drehfrequenzen und deren Vielfachen zu verstehen. Mit anderen Worten handelt es sich dabei insbesondere um die Transformation der Frequenzanalyse aus einer zeitlichen Ebene in eine rotatorische Ebene. Die erste Ordnung entspricht der Drehfrequenz während der Wälzprüfung, die zweite Ordnung der doppelten Drehfrequenz der Wälzprüfung etc.. Die mittels der Wälzprüfung bestimmten Abweichungen werden somit als Ordnungsspektrum bereitgestellt, und zwar mit Ordnungen, die einem Vielfachen der Drehfrequenz während der Wälzprüfung entsprechen. Hierbei können einzelnen Ordnungen oder Ordnungsbereichen des Ordnungsspektrums Prüfmerkmale bzw. geometrische Abweichungen der Verzahnung des verzahnten Bauteils zugeordnet werden.

Auffälligkeiten der Wälzprüfung, die in einem Ordnungsbereich I auftreten, sind beispielsweise auf Teilungsfehler der Verzahnung des verzahnten Bauteils zurückzuführen. Der Ordnungsbereich I erstreckt sich beispielsweise von der ersten Ordnung bis zur ca. 160. Ordnung.

Auffälligkeiten der Wälzprüfung, die in einem Ordnungsbereich II auftreten, sind beispielsweise auf Abweichungen eines Profils oder einer Flanke der Verzahnung des verzahnten Bauteils zurückzuführen. Der Ordnungsbereich II erstreckt sich beispielsweise ca. von der 160. Anordnung bis hin zur 430. Ordnung.

Auffälligkeiten der Wälzprüfung, die in einem Ordnungsbereich III auftreten, sind beispielsweise auf Welligkeiten der Zahnflanken der Verzahnung des verzahnten Bauteils zurückzuführen. Der Ordnungsbereich III erstreckt sich beispielsweise von der 290. Ordnung bis über die 500. Ordnung hinaus.

Die angegebenen Werte für die Erstreckung der Ordnungsbereiche sind lediglich beispielhaft zu verstehen.

Neben den vorgenannten Ordnungsbereichen I, II und III können auch einzelne Ordnungen konkret bestimmten Prüfmerkmale bzw. bestimmten geometrischen Abweichungen der betreffenden Verzahnung zugeordnet werden.

So beschreibt die erste Ordnung des Ordnungsspektrums gemäß der Wälzprüfung den Rundlauffehler einer Verzahnung, wobei der zugeordnete Drehfehler der ersten Ordnung hier mit IV bezeichnet worden ist. Die zweite Ordnung des Ordnungsspektrums gemäß der Wälzprüfung entspricht dem Taumel der Verzahnung, wobei der zugeordnete Drehfehler der zweiten Ordnung hier mit V bezeichnet worden ist.

Ein Ordnungsbereich, der mit VI bezeichnet worden ist, reicht von der dritten Ordnung der Wälzprüfung bis hin zur ersten Zahneingriffsordnung, wobei dominante Ordnungen innerhalb dieses Ordnungsbereich auf periodisch auftretende Teilungsfehler hindeuten.

Einem Ordnungsbereich, der mit VII bezeichnet wird, sind diejenigen Ordnungen der Wälzprüfung zugeordnet, die keinen Eingriffsfrequenzen oder deren harmonischen oder harmonischen Seitenwänden zuzuordnen sind, wobei dieser Ordnungen auch zusammenfassend als Geisterordnungen bezeichnet werden können.

Die einzelnen Zahneingriffsordnungen gemäß der ersten, zweiten, dritten und vierten Zahneingriffsordnungen sind vorliegend mit VIII bezeichnet.

Mit IX sind jeweils Bereiche bezeichnet, die Seitenbänder der harmonischen Eingriffsfrequenzen betreffen, die moduliert sind durch periodische Teilungsabweichung.

Zahneingriffsordnungen gemäß der fünften Zahneingriffsordnungen oder höher sind mit X bezeichnet und üblicherweise auf Welligkeiten der Oberfläche der Flanken zurückzuführen.

Im Rahmen einer jeweilen Wälzprüfung werden Drehzahlrampen abgefahren. Es erfolgt somit eine Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt, wobei während der Wälzprüfung eine Drehzahlrampe gefahren wird, um Messwerte des zu prüfenden Zahnrads entlang der Drehzahlrampe zu ermitteln.

Fig. 4 beschreibt die Nachteile des Vorgehens gemäß dem Stand der Technik, wobei die Drehzahlrampe mit konstanter Beschleunigung über der Zeit abgefahren wird. Fig. 4 zeigt den Verlauf der Drehzahl über der Anzahl der Umdrehungen bei einer konstanten Beschleunigung über der Zeit, mit a = 10 Umdrehungen/(min*s) und mit einer Ausgangsdrehzahl von 10 U/min. Es ist zu erkennen, dass die Änderung der Drehzahl je Umdrehung der zu prüfenden Verzahnung mit steigender Drehzahl abnimmt.

Die nachfolgenden Tabelle zeigt die Daten zur Fig. 4:

| Anzahl Umdrehungen | Zeit [s] | Drehzahl [U/min] | delta Drehzahl [U/min] |
|---|---|---|---|
| 0 | 0,00 | 10,00 | 0,00 |
| 1 | 2,61 | 36,06 | 26,06 |
| 2 | 4,00 | 50,00 | 13,94 |
| 3 | 5,08 | 60,83 | 10,83 |
| 4 | 6,00 | 70,00 | 9,17 |
| 5 | 6,81 | 78,10 | 8,10 |
| 6 | 7,54 | 85,44 | 7,34 |
| 7 | 8,22 | 92,20 | 6,76 |
| 8 | 8,85 | 98,49 | 6,29 |
| 9 | 9,44 | 104,40 | 5,91 |
| 10 | 10,00 | 110,00 | 5,60 |

Für jede Umdrehung des zu prüfenden Zahnrads ergibt sich damit ein andere Drehzahländerung und damit eine inhomogene spektrale Auflösung der Drehzahl in den daraus resultierenden Ordnungsspektren.

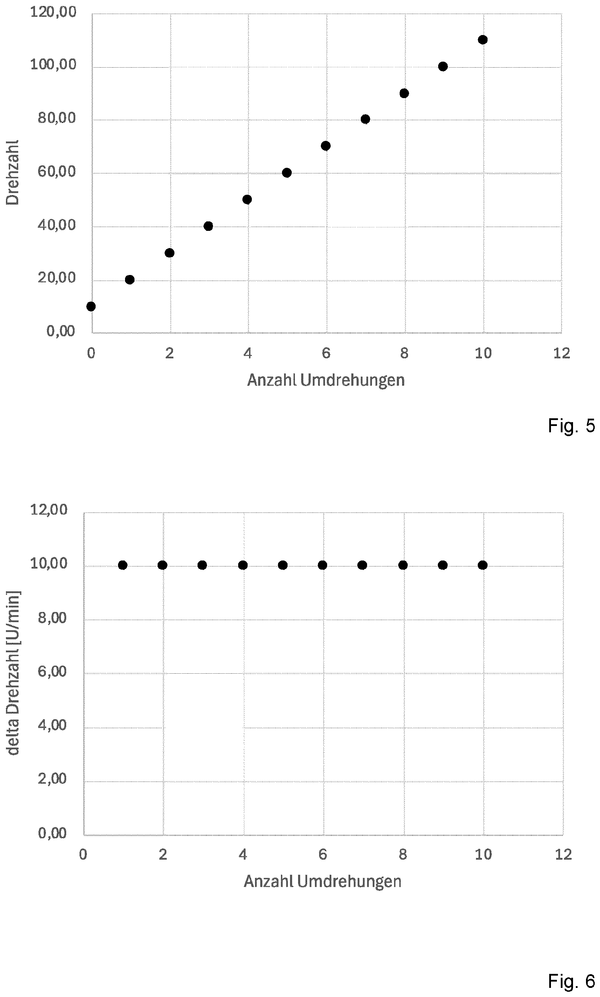

Fig. 5 beschreibt das erfindungsgemäße Vorgehen mit nicht-konstanter Beschleunigung über der Zeit - und zwar mit exponentieller Beschleunigung über der Zeit und der daraus resultierenden konstanten Beschleunigung pro Umdrehung des zu prüfenden Zahnrads.

Fig. 5 zeigt den Verlauf der Drehzahl über der Anzahl der Umdrehungen bei einer konstanten Beschleunigung pro Umdrehung des zu prüfenden Zahnrads, mit a = 10 Umdrehungen/(min*Umdrehung) mit einer Ausgangsdrehzahl von 10 U/min. Es ist zu erkennen, dass die Änderung der Drehzahl je Umdrehung der zu prüfenden Verzahnung mit steigender Drehzahl konstant ist.

Die nachfolgenden Tabelle zeigt die Daten zur Fig. 5:

| Anzahl Umdrehungen | Drehzahl [U/min] | delta Drehzahl [U/min] |
|---|---|---|
| 0 | 10,00 | 0,00 |
| 1 | 20,00 | 10,00 |
| 2 | 30,00 | 10,00 |
| 3 | 40,00 | 10,00 |
| 4 | 50,00 | 10,00 |
| 5 | 60,00 | 10,00 |
| 6 | 70,00 | 10,00 |
| 7 | 80,00 | 10,00 |
| 8 | 90,00 | 10,00 |
| 9 | 100,00 | 10,00 |
| 10 | 110,00 | 10,00 |

Für jede Umdrehung des zur prüfenden Zahnrads ergibt sich damit eine identische Drehzahländerung und damit eine homogene spektrale Auflösung der Drehzahl in den daraus resultierenden Ordnungsspektren.

Wie in Fig. 6 gezeigt, ist damit die Änderung der Drehzahl pro Umdrehung konstant und steigt für jede Umdrehung der zu prüfenden Verzahnung mit delta Drehzahl = 10 U/min an. Delta Drehzahl = 10 U/min spiegelt daher die lineare Steigerung der Drehzahl pro Umdrehung der Fig. 5 wider. Die Drehzahl kann statt als exponentieller Funktion der Zeit daher alternativ auch als lineare Funktion der Umdrehung angegeben werden, mit: $v \left(n\right) = {v}_{o} + k ∗ n$ wobei
- *v* (*n*): der Drehzahl in Umdrehungen pro Minute (U/min) nach *n* Umdrehungen,
- *vₒ*: der Anfangsdrehzahl in Umdrehungen pro Minute,
- *k*: der konstanten Steigerung der Drehzahl pro Umdrehung (in U/min pro Umdrehung)
- *n*: der Anzahl der Umdrehungen des Zahnrads
entspricht.

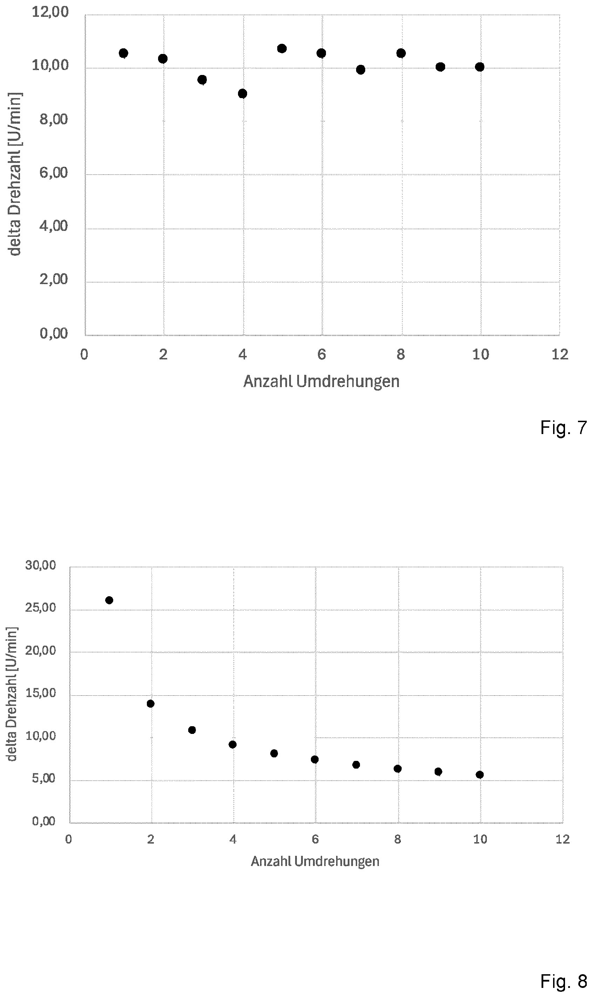

Wie in Fig. 7 gezeigt, kann der erfindungsgemäße Vorteil weiterhin erreicht werden, sofern die Änderung der Drehzahl pro U/min lediglich geringfügig schwankt, z.B. um +/- 10 % um einen Mittelwert von 10 Umdrehungen/(min*Umdrehung). Denn die Änderung der Drehzahl ist bezüglich der Anzahl der Umdrehungen weiterhin deutlich konstanter, als es für eine konstante Beschleunigung über der Zeit der Fall wäre, wie exemplarisch in Fig. 8 gezeigt.

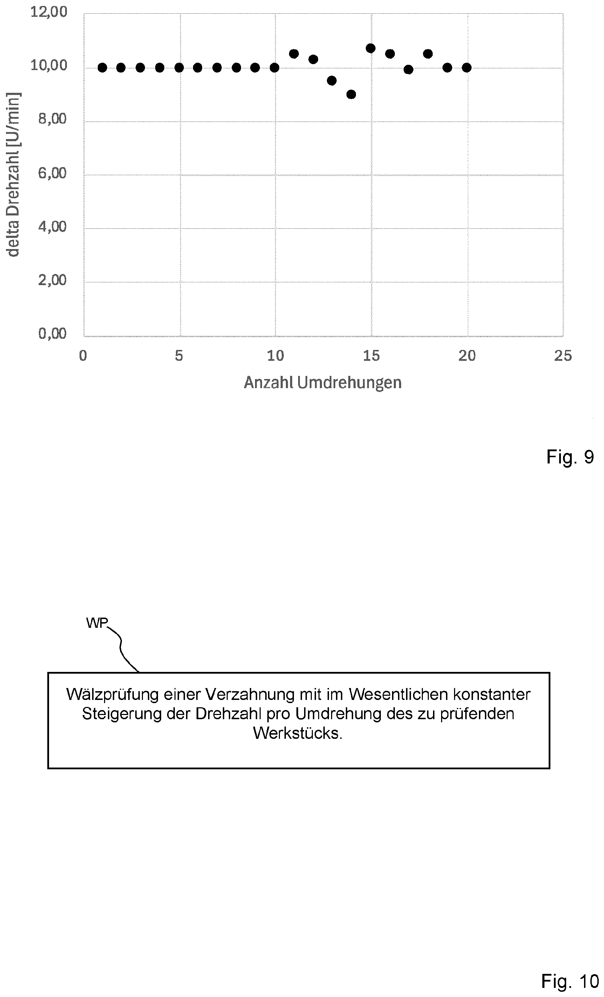

Es kann vorgesehen sein, dass für einen ersten Drehzahlbereich einer Drehzahlrampe eine konstante Steigerung der Drehzahl pro Umdrehung des zu prüfenden Zahnrads verwendet wird (vgl. Fig. 6) und dass für einen zweiten Drehzahlbereich der Drehzahlrampe eine nicht-konstante Steigerung der Drehzahl pro Umdrehung des zu prüfenden Zahnrads verwendet wird, wobei die Änderung der Steigerung der Drehzahl pro Umdrehung jedoch innerhalb vorgegebener Grenzen ist (vgl. Fig. 7). Daraus ergibt sich z.B. ein Verlauf für die Steigerung der Drehzahl pro Umdrehung des zu prüfenden Zahnrads, wie im Fig. 9 exemplarisch dargestellt. Es versteht sich, dass sich auch Bereiche konstanter Steigerung der Drehzahl pro Umdrehung mit Bereichen nicht-konstanter Steigerung der Drehzahl pro Umdrehung abwechseln können.

Erfindungsgemäß kann daher ein Verfahren angegeben werden, mit dem Verfahrensschritt (WP): Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt, wobei während der Wälzprüfung eine Drehzahlrampe gefahren wird, um Messwerte des zu prüfenden Zahnrads entlang der Drehzahlrampe zu ermitteln, wobei für mindestens einen Drehzahlbereich des zu prüfenden Zahnrads, eine Steigerung der Drehzahl pro Umdrehung des zu prüfenden Zahnrads konstant ist, und/oder für mindestens einen Drehzahlbereich des zu prüfenden Zahnrads, eine Änderung Steigerung der Drehzahl pro Umdrehung des zu prüfenden Zahnrads innerhalb vordefinierter Grenzen ist.

Für jede Umdrehung des zu prüfenden Zahnrads kann ein Ordnungsspektrum angegeben werden, z.B. mittels FFT (schnelle Fourier-Transformation).

## Patentansprüche

1. Verfahren, mit dem Verfahrensschritt:
Wälzprüfung einer Verzahnung eines zu prüfenden Zahnrads mittels eines Wälzprüfstands, wobei die Verzahnung des zu prüfenden Zahnrads während der Wälzprüfung mit einer Verzahnung eines Gegenrads abwälzt,
wobei während der Wälzprüfung eine Drehzahlrampe gefahren wird, um Messwerte des zu prüfenden Zahnrads entlang der Drehzahlrampe zu ermitteln,
**dadurch gekennzeichnet,**
**dass**, für mindestens einen Drehzahlbereich des zu prüfenden Zahnrads, eine Steigerung der Drehzahl pro Umdrehung des zu prüfenden Zahnrads konstant ist,
und/oder
**dass**, für mindestens einen Drehzahlbereich des zu prüfenden Zahnrads, eine Änderung Steigerung der Drehzahl pro Umdrehung des zu prüfenden Zahnrads innerhalb vordefinierter Grenzen ist.

2. Verfahren mach Anspruch 1,
**dadurch gekennzeichnet, dass**,
für den mindestens einen Drehzahlbereich, innerhalb dessen die Steigerung der Drehzahl pro Umdrehung des zu prüfenden Zahnrads konstant ist, die Drehzahl des zu prüfenden Zahnrads gemäß der folgenden Vorschrift gesteigert wird: $v \left(t\right) = {v}_{o} ∗ {e}^{\left(k∗t\right)}$ wobei
*v* (*t*) dem Drehzahlverlauf über der Zeit in Umdrehungen pro Minute,
*vₒ* der Anfangsdrehzahl in Umdrehungen pro Minute zu einem Startzeitpunkt *t =* 0,
*e* der eulerschen Zahl,
*k* der Steigerung der Drehzahl pro Umdrehung des zu prüfenden Zahnrads in 1/min
*t* der Zeit in Minuten
entspricht.

3. Verfahren nach Anspruch 2,
**dadurch gekennzeichnet, dass**
die Steigerung der Drehzahl pro Umdrehung des zu prüfenden Zahnrads konstant ist, und insbesondere 0,5 U/min oder 1 U/min oder 1,5 U/min oder 2 U/min pro Umdrehung des zu prüfenden Zahnrads beträgt.

4. Verfahren nach einem der voranstehenden Ansprüche,
**dadurch gekennzeichnet, dass**
für den mindestens einen Drehzahlbereich, innerhalb dessen die Änderung der Steigerung der Drehzahl pro Umdrehung des zu prüfenden Zahnrads innerhalb vordefinierter Grenzen ist, die Änderung der Steigerung der Drehzahl für aufeinanderfolgende Umdrehungen des zu prüfenden Zahnrads weniger als 10 Prozent beträgt, so dass gilt: ${k}_{n} ∗ {a}_{n} \leq {k}_{n + 1}$ wobei
*kₙ* der Steigerung der Drehzahl einer vorhergehenden Umdrehung,
*k*_{*n*+1} der Steigerung der Drehzahl einer auf diese vorhergehende Umdrehung nachfolgenden Umdrehung entspricht, und
*aₙ* einem Faktor größergleich 0,9 und kleinergleich 1,1 entspricht und wobei der Index *n,* mit $n ∈ ℕ$, einer fortlaufenden Nummerierung aufeinanderfolgender Umdrehungen des zu prüfenden Zahnrads entspricht.

5. Verfahren nach Anspruch 4,
**dadurch gekennzeichnet, dass**
eine kumulierte Abweichung der Steigerung der Drehzahl für diesen Drehzahlbereich ±100 % nicht überschreitet, insbesondere ±50 % nicht überschreitet, weiter insbesondere ±25 % nicht überschreitet.

6. Verfahren nach Anspruch 1,
**dadurch gekennzeichnet, dass**
für den mindestens einen Drehzahlbereich, innerhalb dessen die Änderung der Steigerung der Drehzahl pro Umdrehung des zu prüfenden Zahnrads innerhalb vordefinierter Grenzen ist, eine zulässige Abweichung der Steigerung der Drehzahl von einer mittleren Steigerung der Drehzahl über dem Drehzahlbereich für jede Umdrehung des Zahnrads im Drehzahlbereich kleiner als 10 % ist.
